# EUROPÄISCHE PATENTANMELDUNG

(11) **EP 1 959 231 A2**
(43) Veröffentlichungstag der Anmeldung: **20.08.2008**
(21) Anmeldenummer: 08002519.0
(22) Anmeldetag: 12.02.2008
(51) Int. Cl.: G01C 15/00

(54) **Nivellierungs-, Lotungs- und Winkelkalibrierungsinstrument mit einem pendelnd aufgehängten Lotkörper**

(30) Priorität: 13.02.2007 DE 102007007084
(71) Anmelder: Leica Geosystems AG, 9435 Heerbrugg (CH)
(72) Erfinder: Bögel, Gerhard Dipl.-Ing., 9436 Balgach (CH)
(74) Vertreter: Hofmann, Ralf U.

(57) **Zusammenfassung**

Bei einem Nivellierungs-, Lotungs- und Winkelkalibrierungsinstrument ist ein pendelnd aufgehängter Lotkörper (4) vorgesehen, welcher für die Erzeugung und Ausstrahlung von Laserlicht vorgesehene Gruppen (5, 6) von Lichtelementen und/oder Linsen und gegebenenfalls Mittel zur Strahlenteilung und/oder -bündelung trägt. Dem Lotkörpers (4) ist ein die Pendelbewegung bei Bedarf in einer exakten Mittelstellung unterbindendes Klemmelement (7) zugeordnet, welches aus zwei einander gegenüberliegend angeordneten Klemmbacken (8, 9) gebildet ist, welche synchron gegen einen Klemmabschnitt (10) des Lotkörpers (4) verschiebbar sind.

## Beschreibung

Die Erfindung betrifft ein Nivellierungs-, Lotungs- und Winkelkalibrierungsinstrument mit einem pendelnd aufgehängten Lotkörper, welcher für die Erzeugung und Ausstrahlung von Laserlicht vorgesehene Lichtelemente und/oder Linsen und gegebenenfalls Mittel zur Strahlenteilung und/oder-bündelung trägt, wobei dem Lotkörper Mittel zur Begrenzung und/oder zur Sperre der Pendelbewegung zugeordnet sind.

Bei diversen Nivellierungs-, Lotungs- und Winkelkalibrierungsinstrumenten sind Lotkörper vorhanden, welche nach Art eines Kardangelenkes oder aber über ein Kugelgelenk aufgehängt sind. Teilweise wird über den Einsatz von Magneten eine Dämpfung der Pendelbewegung bewirkt. Ein anderes bekanntes Instrument sieht einen Lotkörper mit einem halbkugelförmigen Klemmkörper nahe dessen Lagerstelle vor. Mittels eines Schiebers muss ein der Klemmung dienendes, buchsenartiges Teil nach oben bewegt werden. Die übliche Anwendung eines Linienlasers ist die, dass man vom Standpunkt des Instrumentes aus gesehen eine horizontale und meist auch eine vertikale Linie auf die gegenüberliegende Wand projiziert. Ein Sonderfall der Anwendung ist der, dass es ausreicht, einen 90°-Schnittpunkt in einer beliebigen Höhe, d.h. nicht mehr in der durch den Lotkörper bestimmten Horizontalen, darzustellen. Wird nun bei der bekannten Ausgestaltung der Lotkörper mit dem halbkugelförmigen Klemmkörper bei schräg stehendem Instrumenten-Gehäuse, also nach dem Abnehmen von einem Stativ oder während des Hochhebens vom Boden, geklemmt, dann nimmt der Lotkörper im Instrumenten-Gehäuse ebenfalls eine Schräglage ein. Die Achse des Lotkörpers ist dann also nicht mehr zu einer Außenkante des Instrumenten-Gehäuses parallel. Trotz des aufwändigen Mechanismus ist eine wichtige Zusatzfunktion erschwert oder verunmöglicht. Dieses bekannte Instrument weist sogar eine Schwenkachse auf und ein Führungsgehäuse und dennoch kann der Anwender Schnittpunkte projizieren, also Kreuzungspunkte einer horizontalen und einer vertikalen Linie, die sich nicht mit exakt 90° schneiden. Diese mögliche Fehlerquelle ist umso gravierender, als geringe Abweichungen von 90° nicht mit dem freien Auge sicher beurteilt werden können.

Die Erfindung hat sich zur Aufgabe gestellt, bei einem eingangs genannten Instrument die Mittel zur Sperre der Pendelbewegung so zu gestalten, dass immer in einer vordefinierten Stellung, vorzugsweise in einer exakten Mittelstellung des Lotkörpers eine Sperre erfolgen kann.

Dies gelingt erfindungsgemäß dadurch, dass dem Lotkörpers ein die Pendelbewegung bei Bedarf in einer vordefinierten Stellung, vorzugsweise in der exakten Mittelstellung, unterbindendes Klemmelement zugeordnet ist, welches aus wenigstens zwei einander gegenüberliegend angeordneten Klemmbacken gebildet ist, welche synchron gegen einen Klemmabschnitt des Lotkörpers verschieb- und/oder verschwenkbar sind.

Dadurch ist eine Klemmung immer in der vordefinierten Stellung des Lotkörpers, vorzugsweise in dessen exakter Mittelstellung, möglich geworden. Das Klemmelement kann durch diese Klemmung des Lotkörpers bei Bedarf dessen Pendelbewegung unterbinden und den Lotkörper in der vordefinierten Stellung, vorzugsweise in der exakten Mittelstellung, festhalten. Ob nun der Lotkörper schon in dieser Mittelstellung liegt oder spitzwinklig ausgelenkt ist, spielt keine Rolle. Durch die immer in die gleiche Klemmstellung bringbaren Klemmbacken wird sogar der Lotkörper in diese vordefinierte Stellung gebracht, bevor dann die Klemmbacken die Klemmung bewirken.

Bei der erfindungsgemäßen Lösung wird der Lotkörper, ganz unabhängig davon, ob das Gerät horizontal ausgerichtet ist oder gerade vom Projektionsort entfernt wird und somit schräg im Raum bewegt wird, zwangsläufig durch gegenläufige Klemmbacken zentriert. Neigt man das Instrument bei horizontalem Gehäuse z.B. nach oben, bleibt der Kreuzungspunkt zwischen der höher verlaufenden horizontalen Linie und der vertikalen Linie zwangsläufig senkrecht.

Durch die vorliegende Erfindung werden die Arbeiten mit festgelegtem Lotkörper noch durch eine zweite Massnahme unterstützt. Bereits bei automatischen Rotationslasern war es gängige Praxis, durch Blinken des Laserpunktes anzuzeigen, dass der Laser ausserhalb des Sollbereiches betrieben wird bzw. dass er noch nicht horizontiert ist. Ein nicht erfindungsgemäß ausgestattetes Instrument mit schräg stehend geklemmtem Lotkörper lässt in dieser Einstellung ebenfalls den Laser und damit die Laserlinien blinken. Auf die Dauer ist dieses Blinken nicht nur lästig, sondern ermüdet das Auge. Bei der Ausführung mit der vorliegenden Erfindung hingegen kann bei dem perfekt zentrisch fixierten Lotkörper mit im Dauerlicht leuchtenden Linien gearbeitet werden.

Durch die vorliegende Erfindung ergibt sich also eine Lotkörper-Zentrierung durch ein Einschließen zwischen zwei anstoßenden Klemmbacken. Wird das Instrument einer Beschleunigung ausgesetzt, z.B. hartes Aufsetzen auf eine Betonoberfläche oder gar ein Sturz aus geringer Höhe, kann sich der ganze Lotkörper, d.h. inklusive einer Kardanlagerung axial bewegen. Der grosse Vorteil dieser Anordnung ist die Reduktion von Kräften, die unmittelbar auf die Kugellager wirken. Damit wird indirekt sicher gestellt, dass sich das Einschwingverhalten der Lager nicht verändert. Die Projektion einer in den angegebenen Toleranzen horizontalen, vertikalen Linie ist von dem exakten Wiedererreichen der Einschwingposition abhängig (Schwerkrah-Lotkörper!). Übermäßige Lagerkräfte können die Laufflächen deformieren und zu Eindrücken in den Laufflächen führen, was wiederum Fehler in der Einschwingposition nach sich ziehen würde. Dies kann aber alles durch Einsatz der erfindungsgemäßen Maßnahmen verhindert werden.

Ferner wird vorgeschlagen, dass zwei einander gegenüberliegende, plättchenförmige Klemmbacken in einer Führung verschiebbar synchron in Richtung zum Klemmabschnitt des Lotköpers verschiebbar und von diesem wegführbar sind. Dies ist eine einfache konstruktive Gestaltung, welche auch entsprechend unempfindlich und daher nicht störungsanfällig ist.

Damit auch der Antrieb der Klemmbacken in einfacher Art und Weise erfolgen kann und vor allem die Synchronisation der Bewegung der Klemmbacken gut zu bewerkstelligen ist, wird vorgeschlagen, dass die Klemmbacken abstehende Bolzen aufweisen, welche in die Verschiebebewegung der Klemmbacken bewirkende Führungsschlitze einer verdrehbaren Betätigungsscheibe eingreifen. Es ist somit ein einfacher Schiebeantrieb für die Klemmbacken möglich, welche in guten geradlinigen Führungsnuten gehalten werden können.

Die Zentrierung des Lotkörpers wird sichergestellt, wenn die Klemmbacken an ihrem dem Klemmabschnitt des Lotköpers zugewandten Eingriffsende einen bogenförmigen, vorzugsweise halbkreisbogenförmigen Ausschnitt aufweisen. Selbst wenn sich der Lotkörper nicht in der Zentrierstellung befindet, wird er durch die Ausschnitte an den Eingriffsenden in diese Zentrierstellung geschoben bzw. um die pendelnde Aufhängung des Lotkörpers verschwenkt.

Eine andere konstruktive Lösung mit gleicher Wirkung wird erreicht, wenn die Klemmbacken an ihrem dem Klemmabschnitt des Lotköpers zugewandten Eingriffsende einen V-förmigen oder mehreckförmigen Ausschnitt aufweisen.

Damit die Klemmung in einfacher Weise von der Bedienungsperson des Nivellierungs-, Lotungs- und Winkelkalibrierungsinstrumentes von außen her erfolgen kann, wird vorgesehen, dass die Betätigungsscheibe für die Verschiebebewegung der Klemmbacken mit einem von außerhalb des Instrumentes zugänglichen Umschalthebel in Wirkverbindung steht. Es kann daher in einfacher Weise von der Außenseite des Gehäuses des Instrumentes von einer Entriegelungs- in eine Sperrstellung umgeschaltet werden, wobei allein durch die Verstellung des Umschalthebels die erforderlichen Bewegungen der Klemmbacken ausgelöst und bewirkt werden.

Eine besonders vorteilhafte konstruktive Variante sieht vor, dass die Betätigungsscheibe an einer parallelen, nicht verdrehbaren Scheibe anliegt, wobei die Bolzen der Klemmbacken in Führungsschlitze der Betätigungsscheibe und in weitere Schlitze in der nicht verdrehbaren Scheibe eingreifen. Durch einfache konstruktive Ausgestaltung kann ein leichtgängiges von den Schlitzen in der nicht verdrehbaren Scheibe geführtes Verschieben der Klemmbacken bewirkt werden.

Ferner wird vorgeschlagen, dass der Klemmabschnitt des Lotkörpers und somit die Klemmbacken mit Abstand, jedoch nahe dem freien Endbereich des Lotkörpers ausgebildet bzw. angeordnet sind. Es ist damit die optimale Anordnung erzielt worden, da mit entsprechendem Abstand von der Aufhängung des Lotkörpers auch die geringsten Kräfte durch die Klemmbacken übernommen werden müssen.

Es bedarf keiner besonderen Ausbildung des Klemmabschnittes, da eine einfache Klemmung mittels der Klemmbacken erfolgen kann. Es ist daher eine sinnvolle Ausführung gegeben, wenn der Klemmabschnitt des Lotkörpers ein im Wesentlichen zylindrischer oder vieleckiger Abschnitt ist. Es muss also lediglich ein frei von sonstigen vorstehenden Teilen ausgebildeter Abschnitt sein.

In diesem Zusammenhang ist es vorteilhaft, wenn der Klemmabschnitt des Lotkörpers mit einer elastischen Beschichtung, z.B. einer Gummibeschichtung versehen ist. Die anstoßenden Klemmbacken behindern dadurch auch nicht die Axialbewegung der in großzügig dimensionierten Gummiformteilen gelagerten Lotkörper-Halterungen. Außerdem ist dann auch bei Erschütterungen oder auch bei kleinen Vibrationen keine Geräuschbildung durch die an dem Klemmabschnitt anliegenden Klemmbacken gegeben.

Weitere erfindungsgemäße Merkmale und besondere Vorteile werden in der nachstehenden Beschreibung anhand der Zeichnung noch näher erläutert. Es zeigen:
- Fig.1: eine Schrägsicht eines Nivellierungs-, Lotungs- und Winkelkalibrierungsinstrumentes;
- Fig.2: eine Schrägsicht eines im Nivellierungs-, Lotungs- und Winkelkalibrierungsinstrument eingesetzten Lotkörpers samt einem die Pendelbewegung des Lotkörpers bei Bedarf sperrenden Klemmelementes;
- Fig.3: eine Explosionsdarstellung der Teile des Klemmelementes.

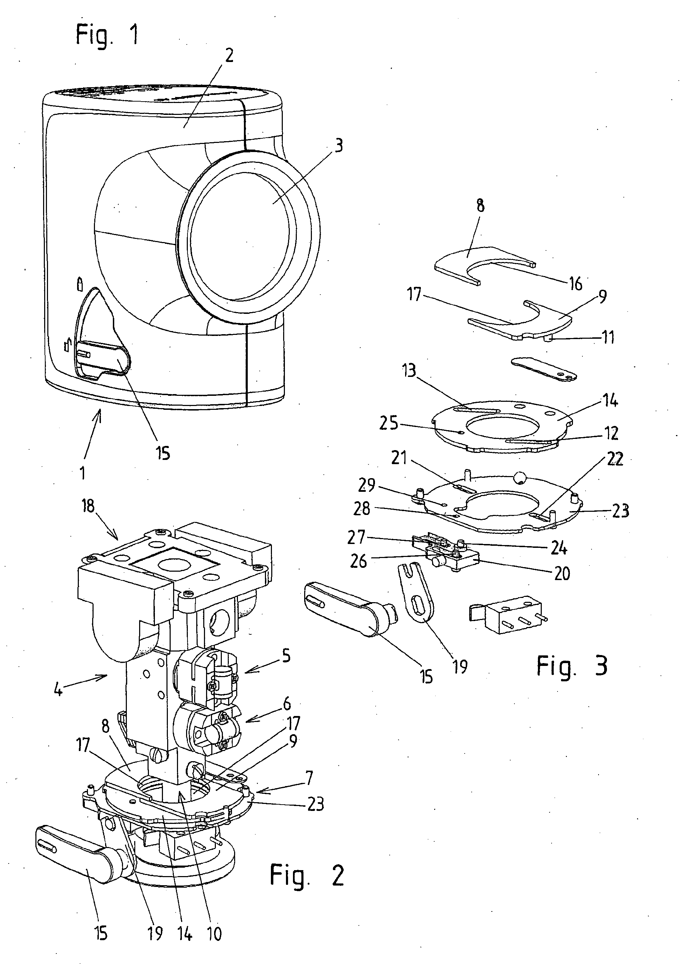

In Fig.1 ist ein Nivellierungs-, Lotungs- und Winkelkalibrierungsinstrument 1 gezeigt, wobei dieser Darstellung natürlich nur das eigentliche Gehäuse 2 zu entnehmen ist. Über eine Öffnung 3 im Gehäuse 2 werden die Laserstrahlen mit entsprechender Richtung und Intensität nach außen geführt und beispielsweise an einer dem Instrument gegenüberliegenden Wand in Form von Punkten oder Strichen oder sich kreuzenden Linien gezeigt.

In dem Gehäuse 2 ist ein Lotkörper 4 pendelnd aufgehängt. Dieser Lotkörper 4 ist mit für die Erzeugung und Ausstrahlung des Laserlichts vorgesehenen Gruppen 5, 6 von Lichtelemente und/oder Linsen und gegebenenfalls mit Mitteln zur Strahlenteilung und/oder-bündelung bestückt. Dem Lotkörper 4 sind außerdem Mittel zur Begrenzung und/oder zur Sperre der Pendelbewegung zugeordnet. Dabei ist Lotkörper 4 ein die Pendelbewegung bei Bedarf in einer vordefinierten Stellung, vorzugsweise in der exakten Mittelstellung, unterbindendes Klemmelement 7 zugeordnet, welches aus wenigstens zwei einander gegenüberliegend angeordneten Klemmbacken 8 und 9 gebildet ist, welche synchron gegen einen Klemmabschnitt 10 des Lotkörpers 4 verschieb- und/oder verschwenkbar sind. In der Zeichnung ist eine Ausführung gezeigt, bei der zwei verschiebbare Klemmbacken 8 und 9 vorgesehen sind. Es wäre aber auch denkbar, mehr als zwei solcher Klemmbacken winkelmäßig versetzt zueinander anzuordnen, so dass auch drei, vier oder noch mehr solcher Klemmbacken vorhanden sein könnten.

Im Rahmen der Erfindung ist es auch denkbar, anstelle von geradlinig verschiebbaren Klemmbacken, um eine oder auch um mehrere Achsen verschwenkbare Klemmbacken vorzusehen, wobei dann lediglich die konstruktiven Mittel für den Schwenkantrieb angepasst werden müssen.

Bei der in der Zeichnung gezeigten Konstruktion sind zwei einander gegenüberliegende, plättchenförmige Klemmbacken 8 und 9 in einer Führung verschiebbar synchron in Richtung zum Klemmabschnitt 10 des Lotköpers 4 hin verschiebbar und von diesem wegführbar.

Die Klemmbacken 8 und 9 weisen abstehende Bolzen 11 auf, welche in die Verschiebebewegung der Klemmbacken 8 und 9 bewirkende Führungsschlitze 12 bzw. 13 einer verdrehbaren Betätigungsscheibe 14 eingreifen. Diese Betätigungsscheibe 14 steht für die Verschiebebewegung der Klemmbacken 8 und 9 mit einem von außerhalb des Instrumentes 1, also an der Außenseite des Gehäuses 2 zugänglichen Umschalthebel 15 in Wirkverbindung. Der Umschalthebel 15 greift über einen weiteren Hebel 19 an ein Übertragungsglied 20 an, welches dann wiederum über einen Bolzen24 in die Betätigungsscheibe 14 eingreift. An der Betätigungsscheibe 14 liegt eine parallele stationäre Scheibe 23 an. Die Bolzen 11 der Klemmbacken 8 und 9 greifen in Führungsschlitze 12, 13 der Betätigungsscheibe 14 und in weitere Schlitze 21 und 22 in der stationären Scheibe 23 ein.

Bolzen 26, 27 durchsetzen Langlöcher im Übertragungsglied 20 und greifen in Löcher 28, 29 der stationären Scheibe 23 ein, wodurch das Übertragungsglied 20 gegenüber der Scheibe 23 verschiebbar ist. Der in ein Loch 25 der Betätigungsscheibe 14 eingreifende Bolzen 24 ist im Übertragungsglied 20 quer hierzu verschiebbar geführt. Hierzu kann er in ein zum Rand des Übertragungsglieds 20 hin offenes Langloch im Übertragungsglied 20 ragen.

Die Klemmbacken 8 und 9 weisen an ihrem dem Klemmabschnitt 10 des Lotköpers 4 zugewandten Eingriffsende einen bogenförmigen, vorzugsweise halbkreisbogenförmigen Ausschnitt 16 bzw. 17 auf. Der Klemmabschnitt 10 kann dadurch besser erfasst und in die Zentrierlage gebracht werden, in der dann die Klemmbacken 8 und 9 den Klemmabschnitt 10 ordnungsgemäß in der gewünschten Stellung halten können.

Im Rahmen der Erfindung ist es aber auch möglich, anstelle eines bogenförmigen Ausschnittes 16 bzw. 17 die Klemmbacken 8 und 9 an ihrem zum Klemmabschnitt 10 des Lotköpers 4 zugewendeten Ende für den Eingriff einem V-förmigen oder mehreckigförmigen Ausschnitt zu versehen. Es ist auch denkbar, mehrere unterschiedliche bogenförmig begrenzte Abschnitte aneinander anschließend vorzusehen. Die Begrenzungen der Ausschnitte 16 bzw. 17 können eben oder aufgeraut oder auch mit Zacken versehen sein.

Die Ausbildung des Klemmabschnittes 10 am Lotkörper 4 kann natürlich irgendwo auf dem Lotkörper 4 angeordnet sein. Vorteilhaft ist jedoch die Anordnung des Klemmabschnittes 10 und somit des Klemmelementes 7 mit den Klemmbacken 8 und 9 mit Abstand, jedoch nahe dem freien Endbereich des Lotkörpers 4. Es ist damit ein relativ großer Abstand zur kardangelenkähnlichen Aufhängung 18 vorhanden, so dass die Halterung und Klemmung des Lotkörpers 4 noch leichter vor sich gehen kann.

In einfacher Art und Weise ist der Klemmabschnitt 10 des Lotkörpers 4 ein im Wesentlichen zylindrischer oder vieleckiger Abschnitt. Es ist dabei zweckmäßig, wenn der Klemmabschnitt 10 des Lotkörpers 4 mit einer elastischen Beschichtung, z.B. einer Gummibeschichtung, versehen ist.

Im Rahmen der Erfindung sind einige konstruktive Änderungen denkbar, wobei jedoch immer als wesentliche Maßnahme ein Klemmelement vorhanden sein muss, welches den Lotkörper in einer vordefinierten Stellung, vorzugsweise in der exakten Mittelstellung, festhalten kann. In der vorstehenden Beschreibung ist immer von der exakten Mittelstellung ausgegangen worden. Es wäre aber auch möglich, eine für bestimmte Konstruktionen sinnvolle andere vordefinierbare Stellung vorzusehen, in welcher der Lotkörper festhaltbar ist. Dies bedarf z.B. nur einer besonderen Einstellung und Anordnung des Klemmelementes 7.

### Legende zu den Hinweisziffern:

- 1: Instrument
- 2: Gehäuse
- 3: Öffnung
- 4: Lotkörper
- 5: Gruppe (von Lichtelementen)
- 6: Gruppe (von Lichtelementen)
- 7: Klemmelement
- 8: Klemmbacken
- 9: Klemmbacken
- 10: Klemmabschnitt
- 11: Bolzen
- 12: Führungsschlitz
- 13: Führungsschlitz
- 14: Betätigungsscheibe
- 15: Umschalthebel
- 16: Ausschnitt
- 17: Ausschnitt
- 18: Aufhängung
- 19: Hebel
- 20: Übertragungsglied
- 21: Schlitz
- 22: Schlitz
- 23: Scheibe
- 24: Bolzen
- 25: Loch
- 26: Bolzen
- 27: Bolzen
- 28: Loch
- 29: Loch

## Patentansprüche

1. Nivellierungs-, Lotungs- und Winkelkalibrierungsinstrument (1) mit einem pendelnd aufgehängten Lotkörper (4), welcher für die Erzeugung und Ausstrahlung von Laserlicht vorgesehene Lichtelemente und/oder Linsen und gegebenenfalls Mittel zur Strahlenteilung und/oder -bündelung trägt, wobei dem Lotkörper (4) Mittel zur Begrenzung und/oder zur Sperre der Pendelbewegung zugeordnet sind, **dadurch gekennzeichnet, dass** dem Lotkörper (4) ein die Pendelbewegung bei Bedarf in einer vordefinierten Stellung, vorzugsweise in der exakten Mittelstellung, unterbindendes Klemmelement (7) zugeordnet ist, welches aus wenigstens zwei einander gegenüberliegend angeordneten Klemmbacken (8, 9) gebildet ist, welche synchron gegen einen Klemmabschnitt (10) des Lotkörpers (4) verschieb- und/oder verschwenkbar sind.

2. Nivellierungs-, Lotungs- und Winkelkalibrierungsinstrument nach Anspruch 1, **dadurch gekennzeichnet, dass** zwei einander gegenüberliegende, plättchenförmige Klemmbacken (8, 9) in einer Führung verschiebbar synchron in Richtung zum Klemmabschnitt (10) des Lotköpers (4) verschiebbar und von diesem wegführbar sind.

3. Nivellierungs-, Lotungs- und Winkelkalibrierungsinstrument nach Anspruch 1 oder 2, **dadurch gekennzeichnet, dass** die Klemmbacken (8, 9) abstehende Bolzen (11) aufweisen, welche in die Verschiebebewegung der Klemmbacken (8, 9) bewirkende Führungsschlitze (12, 13) einer verdrehbaren Betätigungsscheibe (14) eingreifen.

4. Nivellierungs-, Lotungs- und Winkelkalibrierungsinstrument nach einem der Ansprüche 1 bis 3, **dadurch gekennzeichnet, dass** die Klemmbacken (8, 9) an ihrem dem Klemmabschnitt (10) des Lotköpers (4) zugewandten Eingriffsende einen bogenförmigen, vorzugsweise halbkreisbogenförmigen Ausschnitt (16, 17) aufweisen.

5. Nivellierungs-, Lotungs- und Winkelkalibrierungsinstrument nach einem der Ansprüche 1 bis 3, **dadurch gekennzeichnet, dass** die Klemmbacken (8, 9) an ihrem dem Klemmabschnitt (10) des Lotköpers (4) zugewandten Eingriffsende einen V-förmigen oder mehreckförmigen Ausschnitt (16, 17) aufweisen.

6. Nivellierungs-, Lotungs- und Winkelkalibrierungsinstrument nach Anspruch 3, **dadurch gekennzeichnet, dass** die Betätigungsscheibe (14) für die Verschiebebewegung der Klemmbacken (8, 9) mit einem von außerhalb des Instrumentes zugänglichen Umschalthebel (15) in Wirkverbindung steht.

7. Nivellierungs-, Lotungs- und Winkelkalibrierungsinstrument nach Anspruch 3, **dadurch gekennzeichnet, dass** die Bolzen (11) der Klemmbacken (8, 9) weiters in sich in die Verschieberichtung der Klemmbacken (8, 9) erstreckende Schlitze (21, 22) einer Scheibe (23) eingreifen.

8. Nivellierungs-, Lotungs- und Winkelkalibrierungsinstrument nach einem der Ansprüche 1 bis 7, **dadurch gekennzeichnet, dass** der Klemmabschnitt (10) des Lotkörpers (4) und somit die Klemmbacken (8, 9) mit Abstand, jedoch nahe dem freien Endbereich des Lotkörpers (4) ausgebildet bzw. angeordnet sind.

9. Nivellierungs-, Lotungs- und Winkelkalibrierungsinstrument nach Anspruch 1, **dadurch gekennzeichnet, dass** der Klemmabschnitt (10) des Lotkörpers (4) ein im Wesentlichen zylindrischer oder vieleckiger Abschnitt ist.

10. Nivellierungs-, Lotungs- und Winkelkalibrierungsinstrument nach einem der Ansprüche 1 bis 9, **dadurch gekennzeichnet, dass** der Klemmabschnitt (10) des Lotkörpers (4) mit einer elastischen Beschichtung, z.B. einer Gummibeschichtung versehen ist.
